# EUROPEAN PATENT SPECIFICATION

(11) **EP 1 463 348 B1**
(45) Date of publication and mention of the grant of the patent: **28.07.2010**
(21) Application number: 04007363.7
(22) Date of filing: 26.03.2004
(51) Int. Cl.: H04W 88/02

(54) **Method of starting an application program of a mobile terminal and method of providing service data in a mobile communication system**
Verfahren zum Starten eines Anwendungsprogramms in einem mobilen Endgerät und Verfahren zur Bereitstellung von Dienstdaten in einem Mobilkommunikationssystem
Procédé pour lancer une application d'un terminal mobile et procédé pour fournir des données de service dans un système de communication mobile

(30) Priority: 26.03.2003 KR 2003018869
(43) Date of publication of application: 29.09.2004
(73) Proprietor: SAMSUNG ELECTRONICS CO., LTD., Suwon-city, Gyeonggi-do (KR)
(72) Inventor: Seo, Jong-Won, Yeongtong-gu Suwon-si Gyeonggi-do (KR)
(74) Representative: Grünecker, Kinkeldey, Stockmair & Schwanhäusser Anwaltssozietät

(56) References cited:
- WO-A-00/02389
- WO-A-02/067538
- FR-A- 2 761 219

## Description

The present invention relates to a mobile terminal, and more particularly to a method of starting an application program of a mobile terminal having a data terminating function.

A mobile terminal is a multimedia communication device capable of having a variety of functions in addition to a basic voice conversation function, such as electric notebook functions, MP3 (MPEG-1 Audio Layer 3) player functions, games, and information provision functions.

Conventional mobile terminal data services are designed to require that a terminal sends data before a service can be initiated. In general, a mobile terminal invokes its browser through a WAP-push (Wireless Access Protocol-push) service, selects a desired program, and wirelessly connects to the Internet Presently, there is no data terminating service in the prior art, i.e. no service which allows a server to send data to a terminal to initiate a service.

Mobile communication services capable of supporting a data terminating function for a mobile terminal include CDMA (Code Division Multiple Access) 2000 EV-DV and IMT-2000 (International Mobile Telecommunications-2000) services.

An asynchronous IMT-2000 network system supports a multimedia communication service called the 3rd generation mobile communication (3G mobile), which supports the data terminating service of the invention. The asynchronous IMT-2000 network system is based on the UMTS (Universal Mobile Telecommunication System) standard, which is currently being standardized in the 3GPP (3rd Generation Partnership Project).

The call connection process allowing data termination at a mobile terminal in an IMT-2000 system is summarized below.

An origin of a data call requesting initiation of a service (an originating subject) may be a server in a network or a terminal such as a computer. When the originating subject sends the data call to a terminalwhich the originating subject desires to communicate with, the terminal receives a paging signal. In general, the paging signal is indicated as a ring or a vibration according to a setting of the terminal. Subsequently, when a user pushes a key to answer a call on the terminal, the CPU in the terminal uses a call processing program to generate a wireless link to transmit and receive data Next, data outputted from the originating subject is transmitted as TCP/IP packets to the terminal.

When the IMT-2000 service as described above is included in mobile terminals, it will allow them to be used with a great variety of data application programs, such as VOD (Video On Demand), image communications, advertisement broadcasting, and transmission and receipt of messages (e.g., instant messages). Hence it is necessary to select and invoke an appropriate program corresponding to a data terminating call.

FR-A-2 761 219 discloses a method for automatic downloading and/or starting of services offered to a user of a wireless network. The method includes a server able to establish communication between at least two terminals and to further transmit instructions and/or information to one of the terminals. A table is provided, which contains various service types and starting information corresponding to each of the service types. A message containing starting/downloading information is transmitted to the terminal, where the information is identified for a corresponding service using the table. The service type is used after the selection of data termination by the user to start the corresponding service or to download the service in case it is not available on the terminal.

WO 0002389 discloses a communication architecture and service that permits subscribers to dial into a server that provides access to a wide variety of information and entertainment content. News and entertainment content is received from content providers and advertising messages are received from advertisers at a national master server which then transmits this content to another regional server or directly to terminals.

Accordingly, the present invention has been made to solve the above-mentioned problems occurring in the prior art.

The object of the present invention is to provide a method of starting an application program of a mobile terminal so that an application program capable of processing the terminated data is automatically invoked in a mobile terminal having a data terminating function as well as a method of providing service data in a mobile communication system.

This object is solved by the subject matter of the independent claims.

Preferred embodiments are defined by the dependent claims.

In order to accomplish the object, there is provided a method of starting an application program of a mobile terminal having a data terminating function, the method comprising the steps of: receiving a call establishment request for data termination; establishing a data call according to the call establishment request; determining the type of service specified by an application program starting message, when the application program starting message is received after the call is established; and automatically starting an application program corresponding to the determined type of service.

In accordance with another aspect of the present invention, there is provided a method of providing service data to a mobile terminal in a mobile communication system, the mobile terminal having a data terminating function, the method comprising the steps of: receiving a request for data transmission to the mobile terminal from at least one service server; generating an application program starting message for running one of at least one application program stored in the mobile terminal on the basis of the type of service data to be provided by the service server; transmitting a call establishment signal to the mobile terminal, wherein call establishment allows transmission of the generated application program starting message to the mobile terminal; transmitting the application program starting message to the mobile terminal through a traffic channel, the traffic channel being formed upon the selection of data termination at the mobile terminal; and the mobile terminal receiving service data from the service server by connecting with the service server.

The above features and advantages of the present invention will be more apparent from the following detailed description taken in conjunction with the accompanying drawings, in which:
FIG 1 is a schematic view illustrating a mobile communication system according to the present invention;
FIG 2 is a block diagram illustrating a mobile terminal according to the present invention;
FIG 3 is a view illustrating a software configuration for operating application programs stored in a mobile terminal according to the present invention;
FIG 4 illustrates a format of an application program starting message, which is used by a server to run an application program stored in a mobile terminal according to the present invention;
FIG 5 is a control flowchart showing an application program starting method of a mobile terminal according to the present invention;
FIG 6 is a flowchart showing an internal operation of a server of a mobile communication provider starting an application program of a mobile terminal according to a first embodiment of the present invention; and
FIG 7 is a flowchart for explaining an internal operation of a server of a mobile communication provider starting an application program of a mobile terminal according to a second embodiment of the present invention.

A method of starting an application program of a mobile terminal and a method of providing service data in a mobile communication system according to the present invention will be described below with reference to the accompanying drawings. It is to be noted that elements which are the same are indicated with the same reference numerals throughout the drawings. In the following description of the present invention, a detailed description of known functions and configurations incorporated herein will be omitted when it may make the subject matter of the present invention unclear.

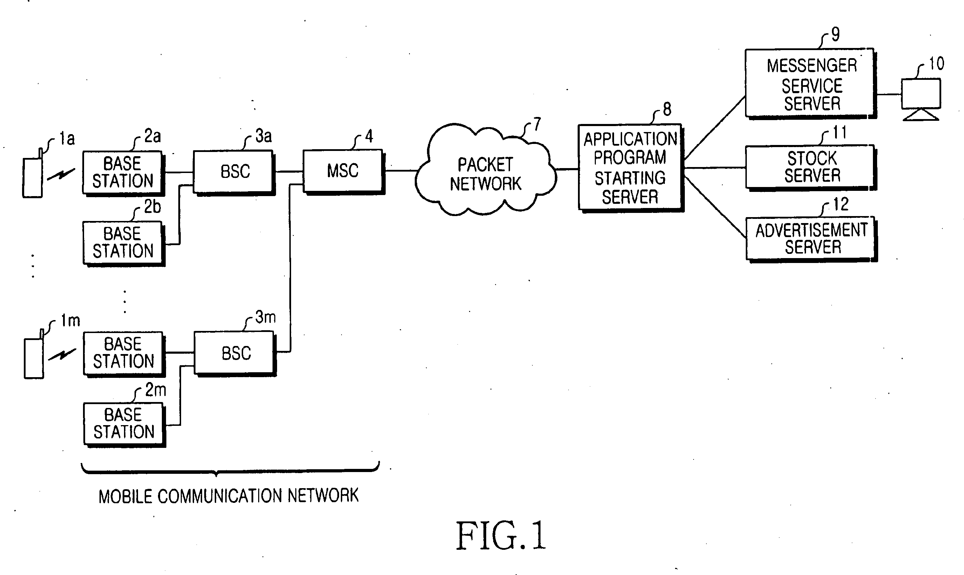

FIG 1 is a schematic view illustrating a mobile communication system according to the present invention. As shown in FIG 1, the mobile communication system includes a plurality of mobile terminals 1a to 1m, a mobile communication network supporting wireless communication services to the mobile terminals 1a to 1m, and an application program starting server 8, which is connected with the mobile communication network and which provides a variety of services to the mobile terminals 1a to 1m.

A first embodiment of the present invention will be described for the case where mobile terminals 1a to 1m are mobile terminals for an IMT-2000 network system, and the mobile communication network is operated using a UMTS (Universal Mobile Telecommunication System) configuration.

The mobile communication network includes a plurality of base stations 2a to 2m, a plurality of BSCs (Base Station Controllers) 3a to 3m, a MSC (Mobile Switching Center) 4, and a GPRS (General Packet Radio Service). The base stations 2a to 2m change signal formats between the mobile terminals 1a to 1m and the BSCs 3a to 3m to be suitable for wireless linking and wired linking. The BSCs 3a to 3m are connected to the base stations 2a to 2m, and perform functions such as base station management, service quality management of hardware and software in the base station, resource allocation and configuration of call traffic, and information collection for base station management. The MSC 4 manages the BSCs 3a to 3m and determines nodes for user traffic either between a mobile communication network and a public switched telephone network or among MSCs in the same mobile communication system. The GPRS is a packet data wireless service for access to internets and data networks in the UMTS (Universal Mobile Telecommunication System) and is provided through a packet network 7. The GPRS uses packet-mode technology to transmit data and signals at high or low speed in the mobile communication network and cooperates with the internet so as to provide an internet service to the mobile terminal 1a to 1m. The GPRS comprises SGSN (Serving GPRS Support Node) and GGSN (Gateway GPRS Support Node). The SGSN, which is a system undertaking a packet service, performs location management of mobile packet subscribers, authentication, and security management. The GGSN, which is a system supporting IP service, accesses external networks such as an internet.

An application program starting server 8 is connected to the packet network 7, and generates application program starting messages for mobile. The application program starting server 8 is connected to a plurality of servers for service providers. Service provider servers include, for example, a messenger service server 9 supporting an interactive message service which uses instant messages, a stock server 11 in which stock information is accumulated, and an advertisement server 12 in which moving-picture advertisement data are accumulated.

In the application program starting server 8, IP information of the stock server 11 and the advertisement server 12 is obtained and stored through communication with service providers of the stock server 11 and the advertisement server 12. When receiving a request for data transmission from an originating terminal such as a mobile terminal or a computer, the application program starting server 8 generates an application program starting message and transmits the application program starting message to a receiving terminal. The originating terminal may, for example, be an advertisement server 12 which transmits advertisement data to a mobile terminal through the mobile communication network and the packet network.

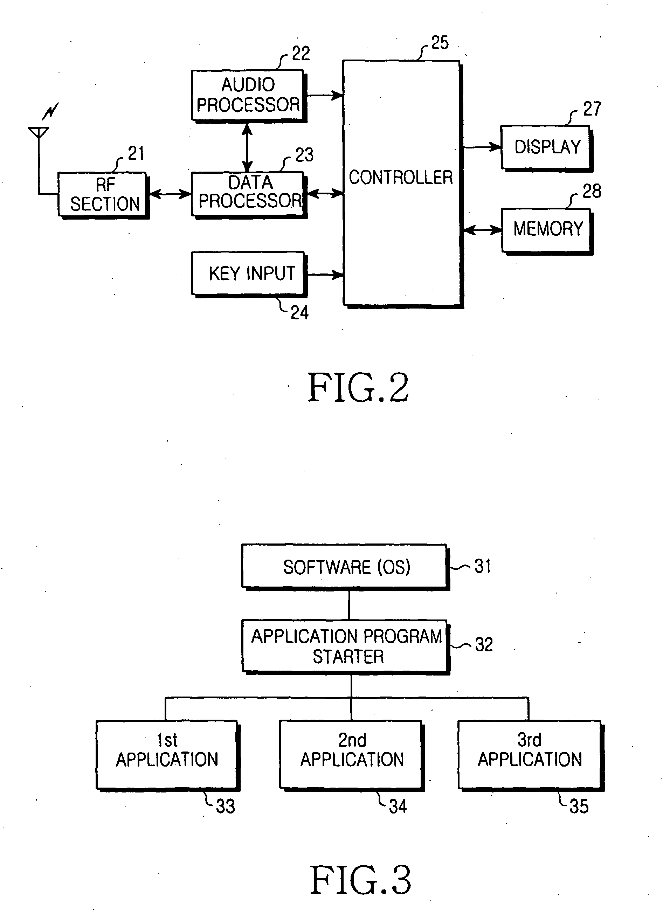

FIG 2 is a block diagram illustrating a mobile terminal according to the present invention. Each of the mobile terminals 1a to 1m, as shown in FIG 2, comprises a RF (Radio Frequency) section 21 for transmitting and receiving wireless signals through an antenna; a data processor 23, connected to the RF section 21, for processing voice and data signals transmitted or received at the RF section 21; an audio processor 22 for processing voice signals outputted from the data process section 23; a keypad 24; a display 27; a memory 28; and a controller 25 for controlling all operations of the mobile terminal. The keypad 24 includes number keys (0-9), specific keys such as '#" and "∗", a voice-terminating key, a data-terminating key, and an 'end' key.

The memory 28 stores an application program starter 32 for starting an appropriate application program when an application program starting message is received. The application program starter 32 is a control program for starting a plurality of application programs which are operated by a software 31 such as an operating system. The application program starter 32 decides which application program to start by analyzing the type of service information which is included in a received application program starting message, and then checking whether or not an appropriate application program capable of processing the service data exists in the memory 28. The memory 28 may also store programs such as an application program for supporting an interactive message communication, a stock application program for processing and displaying stock data, and a plurality of application programs 33, 34 and 35 such as a multimedia application program for processing moving-picture data.

FIG. **3** is a view illustrating a software configuration for operating application programs stored in a mobile terminal according to the present invention. The application program starter 32, as shown in FIG 3, is operated on the basis of an operating software (OS: Operating System) stored in the memory 28 of a mobile terminal. The application program starter 32 receives an application program starting message, analyzes the type of service included in the application program starting message, and operates any one of, for example, a first, a second, and a third application program 33, 34, and 35.

According to the present invention, when receiving a call establishment signal through the RF section 21, the controller 25 of the mobile terminal lets its user know of a termination call establishment request by a ring and/or a vibration. When the user then pushes a data-terminating key in the key input 24, the controller 25 generates a traffic channel for transmitting and receiving data and receives an application program starting message through the traffic channel.

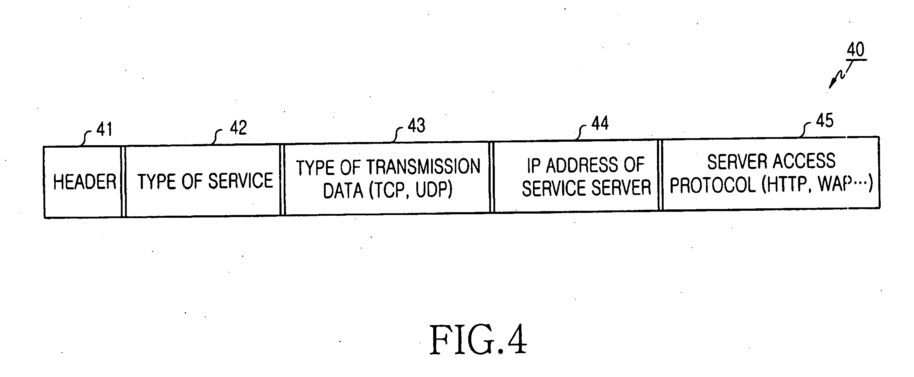

When receiving an application program starting message 40 as shown in FIG 4 (described later), the controller 25 invokes an appropriate application program corresponding to the type of service information, reads an IP address of a service server from the application program starting message, and accesses the service server corresponding to the read IP address.

FIG 4 illustrates a format of an application program starting message 40, which is used for a server to run an application program stored in a mobile terminal according to the present invention. As shown in FIG 4, the application program starting message 40 includes a header 41; type of service information 42, type of transmission data information 43, which may be, for example, TCP (Transmission Control Protocol) or UDP (User Datagram Protocol); service server IP address information 44; and server access protocol information 45, which may be, for example, HTTP (Hypertext Transfer Protocol) or WAP (Wireless Application Protocol). The header 41 stores information allowing a receiving device to decide whether or not a message received through a traffic channel is an application program starting message. The type of service information 42 is used to decide which application program is needed to process data which will be provided from an application program starting server. A mobile terminal operated using a IMT-2000 network system receives an HTTP document and processes the received HTTP document without a document conversion process.

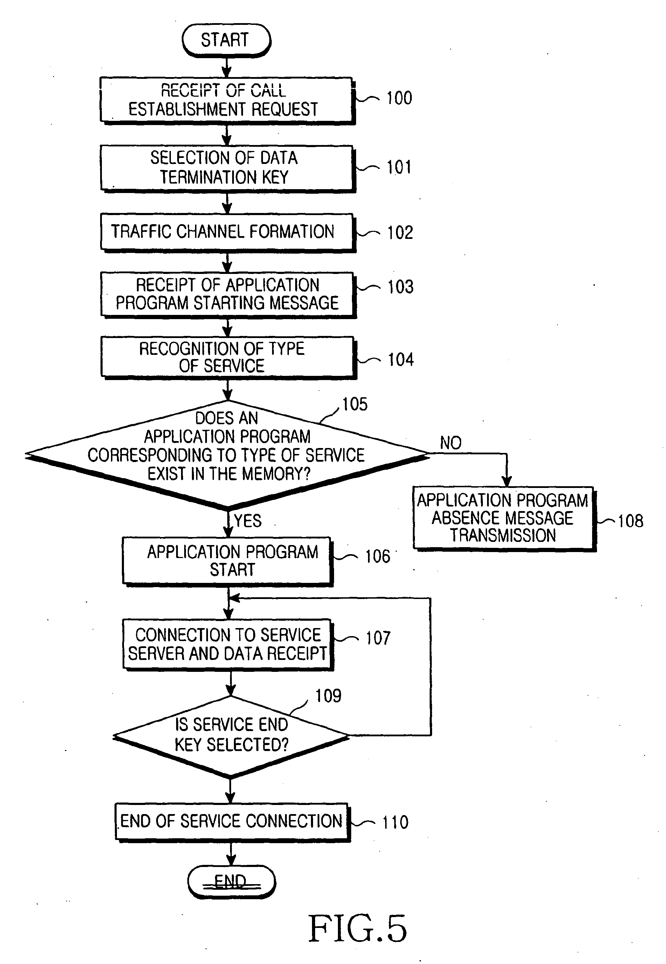

FIG 5 is a control flowchart showing an application program starting method of a mobile terminal according to the present invention. As shown in FIG 5, a mobile terminal receives a call establishment request signal through a paging channel at step 101. When a call establishment approval is indicated by user selecting a data-terminating key in the key input 24 of the mobile terminal at step 101, a traffic channel is generated by a data terminating function (step 102). Subsequently, an application program starting message is received through the traffic channel (step 103), and the type of service is recognized by checking the type of service information in the application program starting message (step 104). At step 105, the control section 25 decides whether or not an appropriate application program exists in the memory 28 which is capable of processing service data corresponding to the recognized type of service. If, as a result of the judgment at step 105, it is found that an appropriate application program exists in the memory 28, the controller 25 starts the appropriate application program at step 106 and proceeds to step 107. At step 107, the control section 28 reads the IP address information and service server access protocol information in the application program starting message, and proceeds to access and receive service data from a service server which has the read IP address. Service data may be, for example, message data of a messenger server or advertisement data of an advertisement server. If it is found at step 105 that no application program capable of processing service data exists in the memory 28, then the controller 25 transmits to the application program starting server 8 an absence message indicating that the appropriate application program does not exist in the memory 28 (step 108). Also, if the user selects the end key in the key input 24 to end the connection to the service server (step 109), the controller 25 of the mobile terminal terminates the connection to the service server (step 110).

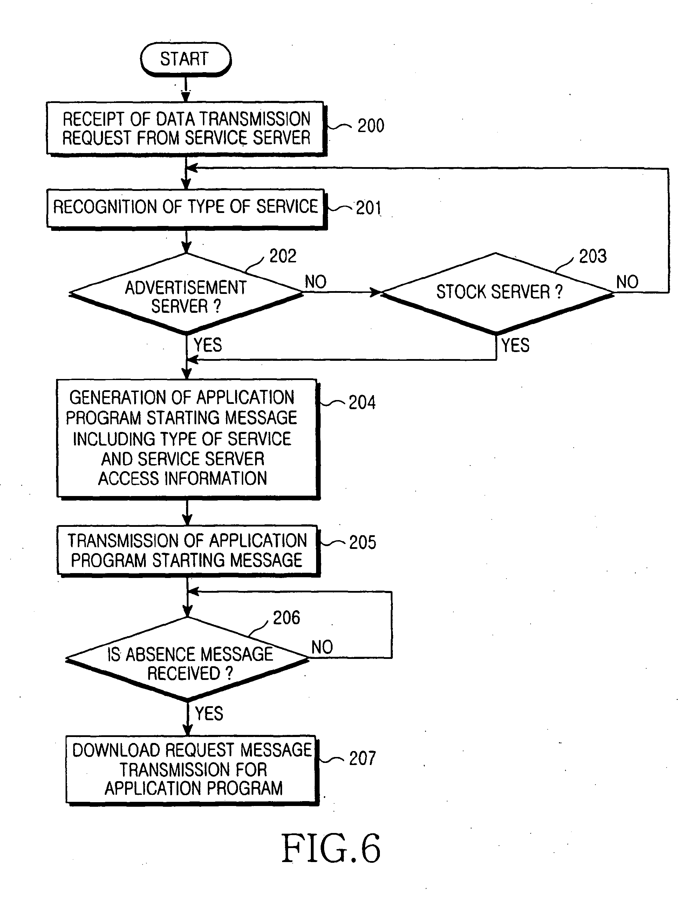

FIG 6 is a flowchart showing an internal operation of an application program starting server 8 starting an application program of a mobile terminal according to a first embodiment of the present invention. As shown in FIG 6, at step 200, an application program starting server 8 receives a service data transmission request from a predetermined service provider server. At step 201, the application program starting server 8 recognizes the type of service provided from the service provider server. If the service provider server is an advertisement server (step 202) or a stock server (step 203), the application program starting server 8 generates an application program starting message including type of service information and information for accessing the advertisement server (step 204). At step 205, the application program starting server 8 transmits the application program starting message to a mobile terminal through a mobile communication network. If the application program starting server 8 receives an absence message from the mobile terminal, indicating that an application program capable of processing service data does not exist in the memory 28(step 205), the application program starting server 8 transmits a download request message to the mobile terminal, requesting that the mobile terminal download an appropriate application program, through the mobile communication network (step 206).

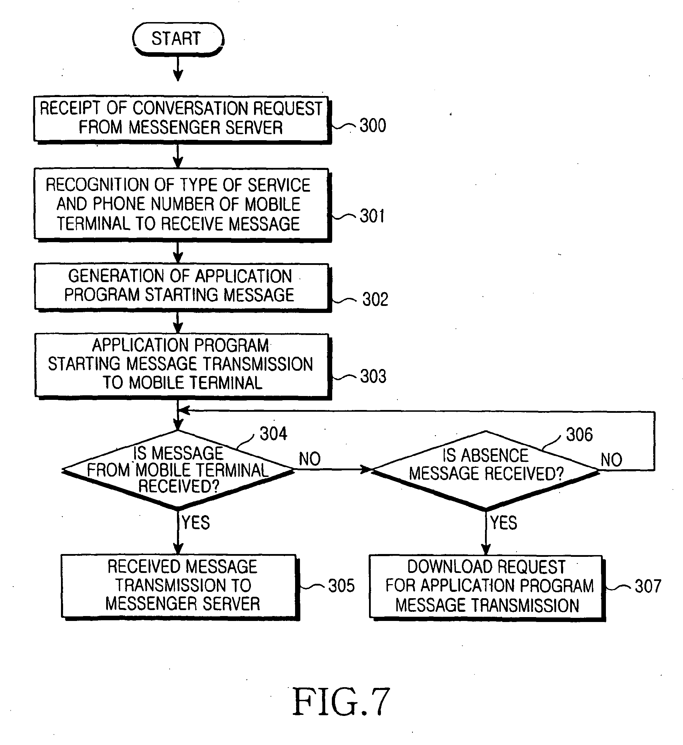

FIG 7 is a flowchart showing an internal operation of an application program starting server starting an application program of a mobile terminal according to a second embodiment of the present invention. The following embodiment will be described for the case wherein a service provider server is a messenger server, and a computer user wants to enact messenger communication with a predetermined mobile terminal in which the computer is an originating subject terminal connected to the messenger server. The messenger server and the application program starting server provide a messenger service function either between a mobile terminal and a computer or between one mobile terminal and another mobile terminal. To this end, the application program starting server has a database in which phone numbers of mobile terminals are stored with corresponding mobile terminal IDs. As shown in FIG 7, at step 300, the application program starting server receives data from a messenger server requesting a conversation. At step 301, on the basis of a type of service to be provided by the messenger server and the ID of a receiving-part mobile terminal provided by the messenger server, the application program starting server extracts a phone number of the receiving-part mobile terminal which is the intended recipient of the message. At step 302, the application program starting server generates an application program starting message including type of service information and messenger server access information. At step 303, the application program starting server transmits the application program starting message to the receiving-part mobile terminal through a mobile communication network so that the receiving-part mobile terminal connects to the application program starting server. Next, when receiving a message transmitted from the mobile terminal through the mobile communication network, the application program starting server converts the received message to an ID corresponding to a phone number of the mobile terminal (step 304), and then transmits the ID with the message to the messenger server, which transmits them to the originating subject computer (step 305). If the application program starting server receives an absence message from the mobile terminal indicating that no appropriate application program exists in the memory 28 (step 306), the application program starting server 8 transmits a download request message to the mobile terminal, requesting that the mobile terminal downloads an appropriate application program, through the mobile communication network (step 307).

Therefore, when the application program starting server 8 transmits an application program starting message to a receiving-part mobile terminal through a traffic channel which is formed when data is terminated to a mobile terminal having a data terminating function, and the receiving-part mobile terminal automatically invokes an application program capable of processing data provided by a service server, and connects to a service server, thus allowing the service server to transmit data - such as advertisement data or message data - to a mobile terminal.

While the invention has been shown and described with reference to certain preferred embodiments thereof, it will be understood by those skilled in the art that various changes in form and details may be made therein without departing from the scope of the invention as defined by the appended claims. Accordingly, the scope of the invention is not to be limited by the above embodiments but by the claims.

## Claims

1. A method of starting an application program (33, 34, 35) of a mobile terminal (1a, 1m) having a data terminating function, the method being performed by the mobile terminal (1a, 1m) comprising the steps of:
receiving a call establishment request for data termination (100);
establishing a data call according to the call establishment request (102);
determining (105) whether or not an appropriate application program corresponding to the type of service specified by an application program starting message (40) or by the call establishment request exists (100) in a memory (28) of the mobile terminal (1a, 1m);
automatically starting an application program (106) corresponding to the type of service specified by the application program starting message (40) or by the call establishment request (100);
originating an absence message (108) when no appropriate application program corresponding to the application program starting message or to the call establishment request exists in the memory (28) of the mobile terminal (1a, 1m); and
ending a call connection.

2. The method of starting an application program of a mobile terminal as claimed in claim 1 further comprising the step of determining the type of service specified by an application program starting message, when the application program starting message is received after the call is established.

3. The method of starting an application program of a mobile terminal as claimed in claim 2, wherein said application program is automatically started in correspondence to a determined type of service.

4. The method of starting an application program of a mobile terminal as claimed in claim 3, wherein establishment of the data call is performed when a data terminating function is selected.

5. The method of starting an application program of a mobile terminal as claimed in claim 3, wherein the application program starting message includes:
a header (41) for determining whether or not a received message is an application program starting message;
type of service information (42);
type of transmission data information (43);
service server access information (44); and
service server access protocol information (45).

6. The method of starting an application program of a mobile terminal as claimed in one of claims 3 to 5, wherein the application program starting message is received through a traffic channel formed in response to establishment of the data call.

7. The method of starting an application program of a mobile terminal as claimed in claim 6, wherein the invoked application program attempts to access an application program starting server (8).

8. The method of starting an application program of a mobile terminal as claimed in claim 1, wherein said type of service is specified by the call establishment request.

9. The method of starting an application program of a mobile terminal as claimed in claim 8, wherein establishment of the data call is performed when a data terminating function is selected by the mobile terminal.

10. The method of starting an application program of a mobile terminal as claimed in claim 9, wherein the call establishment request includes type of service information, type of transmission data information, service server access information, and service server access protocol information

11. The method of starting an application program of a mobile terminal as claimed in claim 10, wherein the invoked application program attempts to access an application program starting server.

12. A method of providing service data to a mobile terminal (1a, 1m) in a mobile communication system, the mobile terminal (1a, 1m) having a data terminating function, the method being performed by an application program starting server (8) comprising the steps of:
receiving (100) a request for data transmission to the mobile terminal from at least one service server (9, 11, 12);
generating an application program starting message 40 for running one of at least one application program (33, 34, 35) stored in the mobile terminal (1a, 1m) on the basis of the type of data to be provided from the service server (9, 11, 12);
transmitting a call establishment signal requesting data termination to the mobile terminal (1a, 1m) wherein the call establishment signal allows transmission of the generated application program starting message (40), to the mobile terminal (1a, 1m);
transmitting the application program starting message (40) to the mobile terminal (1a, 1m) through a traffic channel, the traffic channel being formed upon the selection of data termination at the mobile terminal (1a, 1m); wherein the application program starting message (40) is for starting an application program (33, 34, 35) at the mobile terminal (1a, 1m) and the application program starting message (40) is usable by the mobile terminal (1a,1m) for receiving service data of the service server (9, 11, 12) at the mobile terminal (1a,1m) by connecting the mobile terminal (1a, 1m) to the service server (9, 11, 12);
receiving an absence signal (306) from the mobile terminal (1a, 1m) indicating that no appropriate application program (33, 34, 35) corresponding to the type of service specified by the application program starting message (40) exists in a memory (28) of the mobile terminal (1a, 1m) and
transmitting a download request message (207) to the mobile terminal (1a, 1m) requesting that the mobile terminal (1a,1m) downloads an appropriate application program (33, 34, 35).

13. The method of providing service data in a mobile communication system as claimed in claim 12, wherein the service server includes a stock server (11) in which stock data are stored.

14. The method of providing service data in a mobile communication system as claimed in claim 12, wherein the service server includes an advertisement server (12) in which advertisement data are stored.

15. The method of providing service data in a mobile communication system as claimed in claim 12, wherein the service server includes a messenger server (9) for providing an instant message service.

## Patentansprüche

1. Verfahren zum Starten eines Anwendungsprogramms (33, 34, 35) in einem mobilen Endgerät (1 a, 1m), das eine Datenterminationsfunktion aufweist, wobei das von dem mobilen Endgerät (1a, 1m) durchgeführte Verfahren folgende Schritte umfasst:
Empfangen einer Verbindungsherstellungsanforderung für die Datentermination (100);
Herstellen einer Datenverbindung entsprechend der Verbindungsherstellungsanforderung (102);
Bestimmen (105), ob ein geeignetes Anwendungsprogramm entsprechend dem Diensttyp, der von einer Anwendungsprogramm-Startnachricht (40) oder der Verbindungsherstellungsanforderung (100) spezifiziert wird, im Speicher (28) des mobilen Endgeräts (1 a, 1 m) existiert oder nicht;
automatisches Starten eines Anwendungsprogramms (106) entsprechend dem Diensttyp, der von der Anwendungsprogramm-Startnachricht (40) oder der Verbindungsherstellungsanforderung (100) spezifiziert wurde;
Hervorbringen einer Abwesenheitsnachricht (108), wenn kein geeignetes Anwendungsprogramm entsprechend der Anwendungsprogramm-Startnachricht oder der Verbindungsherstellungsanforderung im Speicher (28) des mobilen Endgeräts (1a, 1m) existiert; und
Beenden einer Verbindung.

2. Verfahren zum Starten eines Anwendungsprogramms in einem mobilen Endgerät nach Anspruch 1, das weiterhin den Schritt des Bestimmens des Diensttyps umfasst, der von einer Anwendungsprogramm-Startnachricht spezifiziert wird, wenn die Anwendungsprogramm-Startnachricht nach dem Herstellen der Verbindung empfangen wird.

3. Verfahren zum Starten eines Anwendungsprogramms in einem mobilen Endgerät nach Anspruch 2, wobei das Anwendungsprogramm in Übereinstimmung mit einem bestimmten Diensttyp gestartet wird.

4. Verfahren zum Starten eines Anwendungsprogramms in einem mobilen Endgerät nach Anspruch 3, wobei die Herstellung der Datenverbindung erfolgt, wenn eine Datenterminationsfunktion ausgewählt ist.

5. Verfahren zum Starten eines Anwendungsprogramms in einem mobilen Endgerät nach Anspruch 3, wobei die Anwendungsprogramm-Startnachricht Folgendes umfasst:
einen Header (41) zum Bestimmen, ob eine empfangene Nachricht eine Anwendungsprogramm-Startnachricht ist oder nicht;
Informationen über den Diensttyp (42);
Informationen über die Sendedaten (43);
Informationen über den Dienstserver-Zugriff (44); und
Informationen über das Dienstserver-Zugriffsprotokoll (45).

6. Verfahren zum Starten eines Anwendungsprogramms in einem mobilen Endgerät nach einem der Ansprüche 3 bis 5, wobei die Anwendungsprogramm-Startnachricht über einen Verkehrskanal empfangen wird, der in Antwort auf die Herstellung der Datenverbindung gebildet wird.

7. Verfahren zum Starten eines Anwendungsprogramms in einem mobilen Endgerät nach Anspruch 6, wobei das aufgerufene Anwendungsprogramm versucht, auf einen Anwendungsprogramm-Startserver (8) zuzugreifen.

8. Verfahren zum Starten eines Anwendungsprogramms in einem mobilen Endgerät nach Anspruch 1, wobei der Diensttyp durch die Verbindungsherstellungsanforderung spezifiziert wird.

9. Verfahren zum Starten eines Anwendungsprogramms in einem mobilen Endgerät nach Anspruch 8, wobei die Herstellung der Datenverbindung erfolgt, wenn eine Datenterminationsfunktion durch das mobile Endgerät ausgewählt wird.

10. Verfahren zum Starten eines Anwendungsprogramms in einem mobilen Endgerät nach Anspruch 9, wobei die Verbindungsherstellungsanforderung Informationen zum Diensttyp, Informationen zum Sendedatentyp, Informationen zum Dienstserver-Zugriff und Informationen zum Dienstserver-Zugriffsprotokoll enthält.

11. Verfahren zum Starten eines Anwendungsprogramms in einem mobilen Endgerät nach Anspruch 10, wobei das aufgerufene Anwendungsprogramm versucht, auf einen Anwendungsprogramm-Startserver zuzugreifen.

12. Verfahren zum Bereitstellen von Dienstdaten für ein mobiles Endgerät (1 a, 1 m) in einem Mobilkommunikationssystem, wobei das mobile Endgerät (1a, 1m) eine Datenterminationsfunktion aufweist, wobei das von einem Anwendungsprogramm-Startserver (8) durchgeführte Verfahren folgende Schritte umfasst:
Empfangen (100) einer Anforderung zur Datenübertragung an das mobile Endgerät von mindestens einem Dienstserver (9, 11, 12);
Erzeugen einer Anwendungsprogramm-Startnachricht (40) zum Ausführen von mindestens einem Anwendungsprogramm (33, 34, 35), das in dem mobilen Endgerät (1 a, 1 m) gespeichert ist, auf der Basis des Typs von Dienstdaten, die von dem Dienstserver (9, 11,12) bereitgestellt werden sollen;
Senden eines Verbindungsherstellungssignals mit der Anforderung einer Datentermination an das mobile Endgerät (1 a, 1 m), wobei das Verbindungsherstellungssignal das Senden der erzeugten Anwendungsprogramm-Startnachricht (40) an das mobile Endgerät (1 a, 1 m) erlaubt;
Senden der Anwendungsprogramm-Startnachricht (40) an das mobile Endgerät (1 a, 1 m) über einen Verkehrskanal, wobei der Verkehrskanal bei Auswahl der Datentermination an dem mobilen Endgerät (1a, 1 m) gebildet wird; wobei die Anwendungsprogramm-Startnachricht (40) zum Starten eines Anwendungsprogramms (33 ,34, 35) in dem mobilen Endgerät (1a, 1m) dient, und die Anwendungsprogramm-Startnachricht (40) von dem mobilen Endgerät (1a, 1m) dazu verwendet werden kann, Dienstdaten von dem Dienstserver (9, 11, 12) auf dem mobilen Endgerät (1a, 1m) zu empfangen, die das mobile Endgerät (1a, 1m) mit dem Dienstserver (9, 11, 12) verbinden;
Empfangen eines Abwesenheitssignals (306) von dem mobilen Endgerät (1a, 1 m), das anzeigt, dass kein geeignetes Anwendungsprogramm (33, 34, 35) entsprechend dem Diensttyp, der von der Anwendungsprogramm-Startnachricht (40) spezifiziert wurde, in einem Speicher (28) des mobilen Endgeräts (1a, 1m) existiert; und
Senden einer Download-Anforderungsnachricht (207) an das mobile Endgerät (1a, 1 m) mit der Anforderung, dass das mobile Endgerät (1 a, 1 m) ein geeignetes Anwendungsprogramm (33, 34, 35) herunterlädt.

13. Verfahren zum Bereitstellen von Dienstdaten in einem Mobilkommunikationssystem nach Anspruch 12, wobei der Dienstserver einen Bestandsserver (11) umfasst, in dem Bestandsdaten gespeichert sind.

14. Verfahren zum Bereitstellen von Dienstdaten in einem Mobilkommunikationssystem nach Anspruch 12, wobei der Dienstserver einen Werbeserver (12) umfasst, in dem Werbedaten gespeichert sind.

15. Verfahren zum Bereitstellen von Dienstdaten in einem Mobilkommunikationssystem nach Anspruch 12, wobei der Dienstserver einen Nachrichtenserver (9) zum Bereitstellen eines Sofortnachrichtendiensts umfasst.

## Revendications

1. Procédé de démarrage d'un logiciel d'application (33, 34, 35) d'un terminal mobile (la, 1m) ayant une fonction d'arrêt de données, le procédé mis en oeuvre par le terminal mobile (la, 1m) comprenant les étapes consistant :
à recevoir une demande d'établissement d'appel pour l'arrêt des données (100) ;
à établir un appel de données conformément à la demande d'établissement d'appel (102) ;
à déterminer (105) si un logiciel d'application approprié correspondant au type de service spécifié par un message de démarrage du logiciel d'application (40) ou par la demande d'établissement d'appel existe ou non (100) dans une mémoire (28) du terminal mobile (la, 1m) ;
à démarrer automatiquement un logiciel d'application (106) correspondant au type de service spécifié par le message de démarrage du logiciel d'application (40) ou par la demande d'établissement d'appel (100) ;
à émettre un message d'absence (108) lorsqu'aucun logiciel d'application approprié correspondant au message de démarrage du logiciel d'application ou à la demande d'établissement d'appel n'existe pas dans la mémoire (28) du terminal mobile (la, 1m) ; et
à arrêter une connexion d'appel.

2. Procédé de démarrage d'un logiciel d'application d'un terminal mobile selon la revendication 1, comprenant en outre l'étape de détermination du type de service spécifié par un message de démarrage du logiciel d'application lorsque le message de démarrage du logiciel d'application est reçu après établissement de l'appel.

3. Procédé de démarrage d'un logiciel d'application d'un terminal mobile selon la revendication 2, dans lequel ledit logiciel d'application est automatiquement démarré conformément à un type de service déterminé.

4. Procédé de démarrage d'un logiciel d'application d'un terminal mobile selon la revendication 3, dans lequel l'établissement de l'appel de données est effectué lorsqu'une fonction d'arrêt de données est sélectionnée.

5. Procédé de démarrage d'un logiciel d'application d'un terminal mobile selon la revendication 3, dans lequel le message de démarrage du logiciel d'application comprend :
un en-tête (41) pour déterminer si un message reçu est oui ou non un message de démarrage du logiciel d'application ;
le type d'informations de service (42) ;
le type d'informations de données de transmission (43) ;
des informations d'accès au serveur de service (44) ; et
des informations de protocole d'accès au serveur de service (45).

6. Procédé de démarrage d'un logiciel d'application d'un terminal mobile selon l'une des revendications 3 à 5, dans lequel le message de démarrage du logiciel d'application est reçu via un canal de trafic formé en réponse à l'établissement de l'appel de données.

7. Procédé de démarrage d'un logiciel d'application d'un terminal mobile selon la revendication 6, dans lequel le logiciel d'application invoqué tente d'accéder à un serveur de démarrage du logiciel d'application (8).

8. Procédé de démarrage d'un logiciel d'application d'un terminal mobile selon la revendication 1, dans lequel ledit type de service est spécifié par la demande d'établissement d'appel.

9. Procédé de démarrage d'un logiciel d'application d'un terminal mobile selon la revendication 8, dans lequel l'établissement de l'appel de données est effectué lorsqu'une fonction d'arrêt de données est sélectionnée par le terminal mobile.

10. Procédé de démarrage d'un logiciel d'application d'un terminal mobile selon la revendication 9, dans lequel la demande d'établissement d'appel comprend le type d'informations de service, le type d'informations de données de transmission, des informations d'accès au serveur de service et des informations de protocole d'accès au serveur de service.

11. Procédé de démarrage d'un logiciel d'application d'un terminal mobile selon la revendication 10, dans lequel le logiciel d'application invoqué tente d'accéder à un serveur de démarrage du logiciel d'application.

12. Procédé pour fournir des données de service à un terminal mobile (la, 1m) dans un système de communication mobile, le terminal mobile (la, 1m) ayant une fonction d'arrêt de données, le procédé étant mis en oeuvre par un serveur de démarrage du logiciel d'application (8) et comprenant les étapes consistant :
à recevoir (100) une demande de transmission de données au terminal mobile par au moins un serveur de service (9, 11, 12) ;
à générer un message de démarrage du logiciel d'application (40) pour mettre en oeuvre un d'au moins un logiciel d'application (33, 34, 35) stocké dans le terminal mobile (la, 1m) sur base du type de données de service à fournir par le serveur de service (9, 11, 12) ;
à transmettre un signal d'établissement d'appel demandant l'arrêt des données au terminal mobile (la, 1m), dans lequel le signal d'établissement d'appel permet la transmission du message de démarrage du logiciel d'application (40) généré vers le terminal mobile (la, 1m) ;
à transmettre le message de démarrage du logiciel d'application (40) au terminal mobile (la, 1m) via un canal de trafic, le canal de trafic étant formé lors de la sélection de l'arrêt des données dans le terminal mobile (1a, 1m), dans lequel le message de démarrage du logiciel d'application (40) permet de démarrer un logiciel d'application (33, 34, 35) dans le terminal mobile (la, 1m) et le message de démarrage du logiciel d'application (40) peut être utilisé par le terminal mobile (1a, 1m) pour recevoir des données de service du serveur de service (9,11,12) dans le terminal mobile (la, 1m) en connectant le terminal mobile (la, 1m) au serveur de service (9,11,12) ;
à recevoir un signal d'absence (306) du terminal mobile (la, 1m) indiquant qu'aucun logiciel d'application (33, 34, 35) approprié correspondant au type de service spécifié par le message de démarrage du logiciel d'application (40) n'existe dans une mémoire (28) du terminal mobile (la, 1m) ; et
à transmettre un message de demande de téléchargement (207) au terminal mobile (la, 1m) demandant au terminal mobile (la, 1m) de télécharger un logiciel d'application (33, 34, 35) approprié.

13. Procédé pour fournir des données de service dans un système de communication mobile selon la revendication 12, dans lequel le serveur de service comprend un serveur de stock (11) dans lequel des données de stock sont enregistrées.

14. Procédé pour fournir des données de service dans un système de communication mobile selon la revendication 12, dans lequel le serveur de service comprend un serveur d'avertissement (12) où des données d'avertissement sont enregistrées.

15. Procédé pour fournir des données de service dans un système de communication mobile selon la revendication 12, dans lequel le serveur de service comprend un serveur de messagerie (9) pour procurer un service de messagerie instantanée.
